# EUROPÄISCHE PATENTSCHRIFT

(11) **EP 2 383 138 B1**
(45) Veröffentlichungstag und Bekanntmachung des Hinweises auf die Patenterteilung: **12.09.2012**
(21) Anmeldenummer: 11001553.4
(22) Anmeldetag: 25.02.2011
(51) Int. Cl.: F02M 35/10, B60K 5/12, F02B 29/04

(54) **Anordnung einer Ladeluftleitung an einer Brennkraftmaschine**
Arrangement of a charge air conduit in a combustion engine
Agencement de guidage d'air de suralimentation dans un moteur à combustion interne

(30) Priorität: 27.04.2010 DE 102010018356
(43) Veröffentlichungstag der Anmeldung: 02.11.2011
(73) Patentinhaber: MAN Truck & Bus AG, 80995 München (DE)
(72) Erfinder: Schatz, Norbert, 90408 Nürnberg (DE); Berner, Armin, 91567 Herrieden (DE); Kraft, Florian, 90459 Nürnberg (DE); Leitel, Thomas, 90453 Nürnberg (DE); Buchriegler, Leopold, 3335 Weyer (AT)

(56) Entgegenhaltungen:
- EP-A2- 1 336 735
- WO-A1-03/074310
- DE-A1- 3 047 963
- DE-A1- 10 017 433
- DE-A1- 10 329 441
- DE-A1-102005 032 919
- DE-A1-102005 037 521
- US-B1- 7 353 898

## Beschreibung

Die vorliegende Erfindung betrifft die Anordnung einer Ladeluftleitung an einer Brennkraftmaschine, insbesondere für Kraftfahrzeuge, gemäß dem Oberbegriff des Patentanspruches 1.

Durch die DE 103 29 441 B4 ist eine Anordnung einer Ladeluftleitung zwischen einem Ladeluftkühler einer Abgasturboaufladung und einer Luftverteilereinrichtung bekannt, bei der ein Abschnitt der Ladeluftleitung durch einen an einer Längsseite der Brennkraftmaschine angebauten Motorträger hindurchgeführt ist, wobei ferner an diesen rohrförmigen Abschnitt ein Befestigungsflansch angegossen ist. Dies ermöglicht eine stabile und bauraumgünstige Anordnung dieses Abschnittes der Ladeluftleitung.

Die Offenlegungsschrift DE 10 2005 037 521 A1 lehrt einen Motorträger für eine in einem Fahrzeug betriebene Brennkraftmaschine der mit einer integrierten Kühlmittelsaugleitung ausgebildet ist wobei an der integrierten Kühlmitetlsaugleitung weitere Anschlüsse angeordnet sind, um weitere Kühlmittelteilströme einzuleiten.

Die PCT-Anmeldung WO 03/074310 A1 beschreibt eine Brennkraftmaschine für ein Kraftfahrzeug deren Träger im seitlichen Längsaufbau der Brennkraftmaschine angeordnet ist und ein Mischventil, welches das Abgas der Abgasrückführleitung zur Frischluft in die Ansauganlage zumischt in den Träger integriert ist.

Aufgabe der Erfindung ist es, ausgehend von der gattungsgemäßen Anordnung der Ladeluftleitung diese baulich weiter zu vereinfachen und zudem den funktionell in der Ladeluftleitung integrierten Ladeluftkühler derart einzubinden, dass eine besonders montage- und gewichtsgünstige Konstruktion geschaffen ist.

Diese Aufgabe wird mit den Merkmalen des Patentanspruches 1 gelöst. Vorteilhafte und besonders zweckmäßige Weiterbildungen der Erfindung sind in den Unteransprüchen angeführt.

Erfindungsgemäß wird vorgeschlagen, dass Abschnitte der Ladeluftleitung in an beiden Längsseiten der Brennkraftmaschine vorgesehene Motorträger integriert sind und dass der Ladeluftkühler an Befestigungsflanschen der beiden Motorträger angeschlossen ist und mit den integrierten Abschnitten der Ladeluftleitung kommuniziert. Mit diesem Vorschlag bildet der Ladeluftkühler mit den beiden, seitlichen Motorträgern eine Montageeinheit, bei der die Motorträger neben deren eigentlicher Tragfunktion für die Brennkraftmaschine zugleich den Motorträger aussteifende Abschnitte der Ladeluftleitung bilden und zudem den Ladeluftkühler als dazwischen liegenden Abschnitt der Ladeluftleitung tragen. Diese Mehrfachfunktion lässt sich dabei mit geringem konstruktiven Mehraufwand an den bevorzugt im Gießverfahren hergestellten Motorträgern verwirklichen. Ein weiterer wesentlicher Vorteil liegt darin, dass in Verbindung mit der erfindungsgemäßen Konstruktion ein frei zugänglicher Ölwannenflansch am Kurbelgehäuse bzw. Zylinderblock erhalten werden kann, was erhebliche Freiheiten bei der Montage sowie auch erhebliche konstruktive Freiheitsgrade mit sich bringt.

In vorteilhafter Weiterbildung der Erfindung können die an den Motorträgern vorgesehenen, etwa horizontal ausgerichteten Befestigungsflansche die der Kraftabgabeseite gegenüberliegende Stirnseite der Brennkraftmaschine überragen und mit dem vor der Stirnseite positionierten Ladeluftkühler mit korrespondierenden Gegenflanschen verschraubt sein. Der Ladeluftkühler liegt somit in bauraumgünstiger Weise vor der Brennkraftmaschine und ist von den seitlich vorne positionierten Motorträgern zuverlässig gehalten.

Eine besonders bevorzugte, baulich günstige und tragfähige Konstruktion kann zudem dadurch erzielt werden, dass die Motorträger mit im Wesentlichen vertikal verlaufenden Anschlussflanschen an den Längsseiten der Brennkraftmaschine befestigt sind, dass oberhalb der Anschlussflansche seitlich abragende Tragarme angeformt sind und dass die die Stirnseite der Brennkraftmaschine überragenden Befestigungsflansche unterhalb der Anschlussflansche liegen.

Dabei können ferner die an den Motorträgern vorgesehenen Abschnitte der Ladeluftleitung unmittelbar an die Befestigungsflansche und an die Tragarme angegossen sein, so dass sie in besonderem Maße die Motorträger verstärkend in deren Konstruktion eingebunden sind.

Des Weiteren können die angegossenen Abschnitte der Ladeluftleitung einerseits einen die Anschlussflansche überragenden Rohranschluss aufweisen und andererseits über einen Krümmungsabschnitt in die Befestigungsflansche einmünden. Über den abragenden Rohranschluss kann in einfacher, montagegünstiger Weise die weiterführende Ladeluftleitung bis hin zur Luftverteileinrichtung angeschlossen werden.

Eine besonders montagegünstige Ausgestaltung der Motorträger kann ferner dadurch erzielt werden, dass mehrere Befestigungsschrauben die Anschlussflansche und teilweise die Tragarme außerhalb der angegossenen Abschnitte der Ladeluftleitung durchdringen und in korrespondierende Anschlussflansche an den Längsseiten der Brennkraftmaschine eingeschraubt sind. Damit sind die Befestigungsschrauben für Schraubwerkzeuge gut zugänglich angeordnet und eine strömungsgünstige, glatte Leitungsführung ohne einengende Schraubbutzen oder dergleichen ermöglicht.

Der Ladeluftkühler kann bevorzugt ein Luft-Wasser-Wärmetauscher sein, der an das Flüssigkeits-Kühlsystem der Brennkraftmaschine angeschlossen ist. In weiterer, vorteilhafter Ausgestaltung der Erfindung kann dabei der Kühlwasser-Anschluss des Ladeluftkühlers einströmseitig und/oder ausströmseitig über Zwischenflansche erfolgen, die zwischen den Befestigungsflanschen der Motorträger und den korrespondierenden Gegenflanschen des Ladeluftkühlers angeordnet sind und die jeweils einen Anschlussstutzen für einen Kühlwasserschlauch und integrierte, mit dem Ladeluftkühler kommunizierende Kühlwasserkanäle aufweisen. Dies stellt einen relativ einfachen und montagegünstigen Anschluss des Ladeluftkühlers an das Kühlsystem der Brennkraftmaschine sicher, zum Beispiel den Anschluss an einen separaten Niedertemperatur-Kühlwasserkreislauf.

Schließlich kann die Ladeluftleitung mit dem funktionell integrierten Ladeluftkühler Teil einer an sich bekannten ein- oder zweistufigen AbgasturboAufladung sein und den Verdichter des Hochdruck-Abgasturboladers mit der Luftverteilereinrichtung auf der anderen Längsseite der mehrzylindrigen Brennkraftmaschine verbinden.

Ein Ausführungsbeispiel der Erfindung ist im Folgenden anhand der anliegenden Zeichnung näher erläutert. Es zeigen:
- Fig. 1: die zwei Abgasturbolader aufweisende Längsseite eines Zylinderblockes einer 6-Zylinder-Reihen-Brennkraftmaschine mit einer Ladeluftleitung, deren in einen Ladeluftkühler mündender Abschnitt in einen seitlichen Motorträger integriert ist,
- Fig. 2: die gegenüber liegende Längsseite der Brennkraftmaschine, mit der vom Ladeluftkühler zu einer Luftverteileinrichtung weiterführenden La- deluftleitung, deren vom Ladeluftkühler abgehender Abschnitt in einen weiteren, seitlichen Motorträger integriert ist,
- Fig. 3: eine Ansicht auf die der Kraftabgabeseite der Brennkraftmaschine gegenüberliegende Stirnseite des Zylinderblockes mit den beiden, angeflanschten Motorträgern und dem Ladeluftkühler,
- Fig. 4: einen Schnitt gemäß Linie IV - IV der Fig. 3 durch den auf der Zeichnung linken Motorträger mit integriertem Abschnitt der Ladeluftleitung, daran angeflanschtem Ladeluftkühler und dazwischen liegendem Zwischenflansch zum Anschluss eines Kühlwasserkreislaufes,
- Fig. 5: einen weiteren Schnitt gemäß Linie V - V der Fig. 3 durch den auf der Zeichnung rechten Motorträger mit dem zweiten, integriertem Abschnitt der Ladeluftleitung, daran angeflanschtem Ladeluftkühler und einem Zwischenflansch für den Kühlwasserkreislauf, und
- Fig. 6: die als Montageeinheit ausgeführten beiden Motorträger mit angeflanschtem Ladeluftkühler in einer raumbildlichen Darstellung.

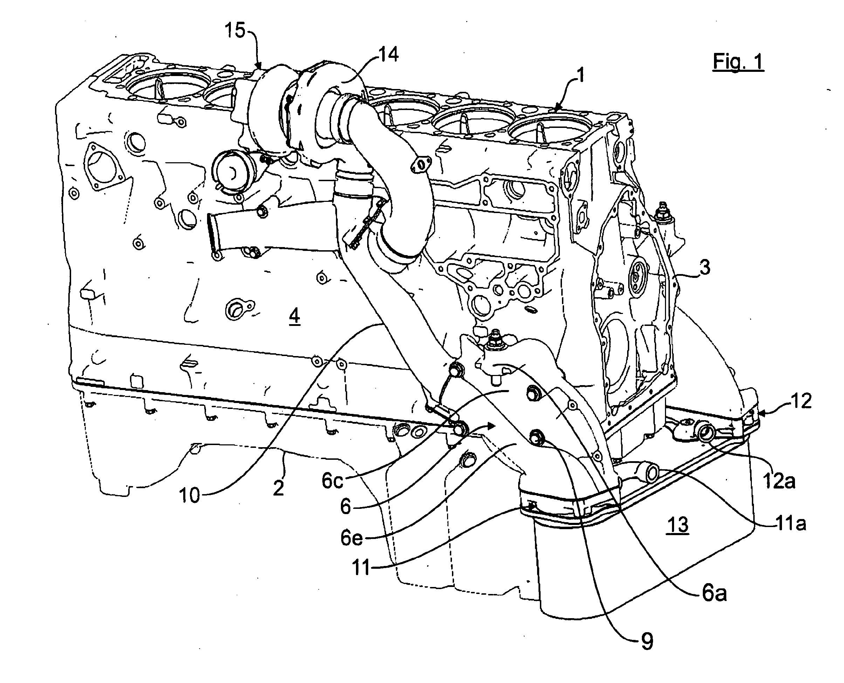

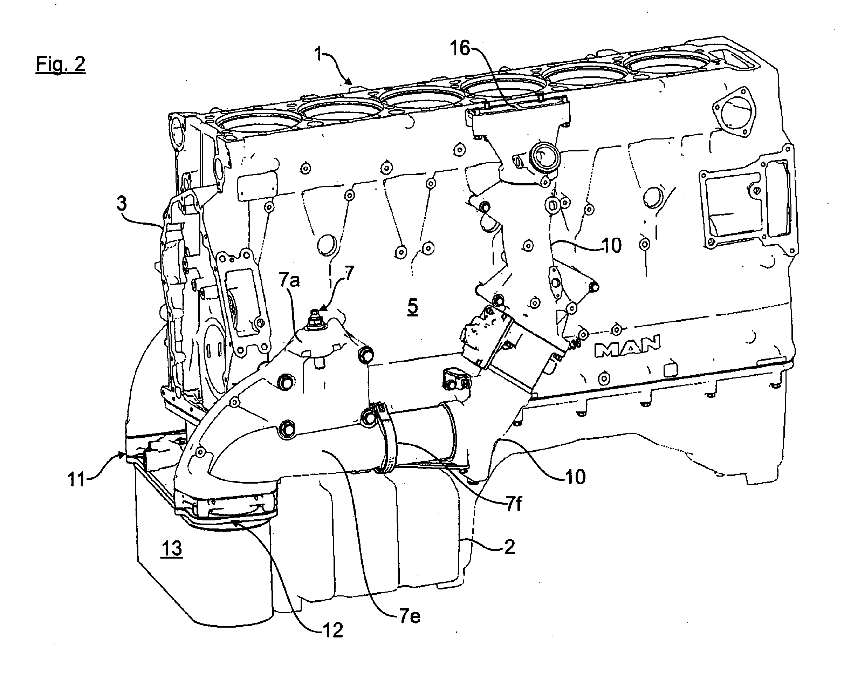

In den Fig. 1 und 2 sind der Zylinderblock 1 und die Ölwanne 2 einer hier beispielhaft Sechszylinder-Reihen-Brennkraftmaschine für ein Kraftfahrzeug dargestellt, die in der hier gezeigten beispielhaften Ausführungsform in Nähe der der Kraftabgabeseite der Brennkraftmaschine gegenüberliegenden Stirnseite 3 über an je einer Längsseite 4, 5 angeordnete Motorträger 6, 7 an der Rahmenstruktur (nicht dargestellt) des Kraftfahrzeuges aufgehängt ist.

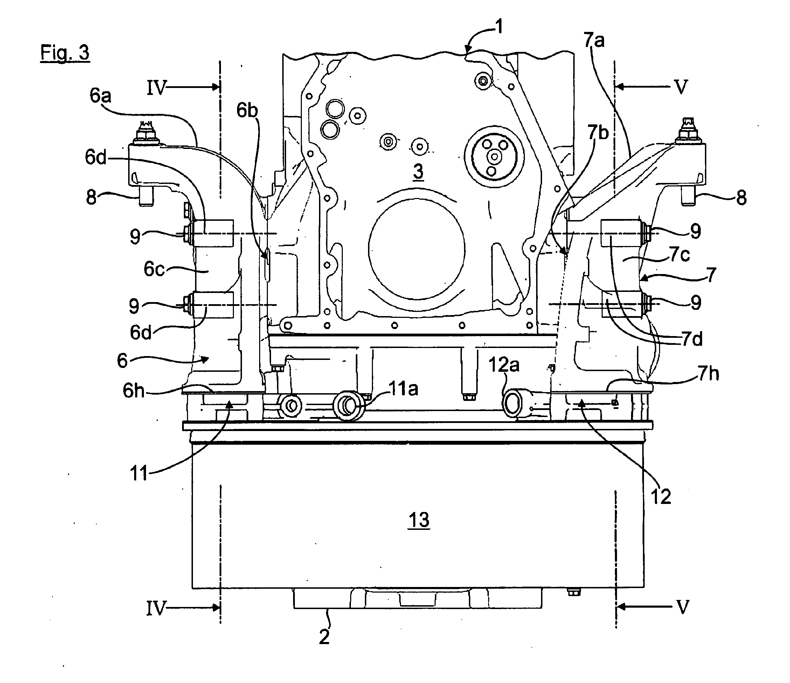

Dazu weisen die bevorzugt im Gießverfahren hergestellten Motorträger 6, 7 (vgl. Fig. 3) an deren, in Fahrzeughochachsenrichtung gesehen, oberem Ende seitlich abragende Arme 6a, 7a auf, die über Befestigungsschrauben 8 in nicht dargestellter Weise mit gummielastischen Dämpferlagern fest verbunden sein können, die wiederum an der besagten Rahmenstruktur befestigt sind. Die die Brennkraftmaschine weiter abstützenden Dämpferlager (zum Beispiel für eine Dreipunktlagerung, eine Vierpunktlagerung oder dergl.) sind nicht dargestellt.

Die Motorträger 6, 7 weisen zu deren Befestigung an den Längsseiten 4, 5 des Zylinderblockes 1 vertikal ausgerichtete und seitenparallel verlaufende Anschlussflansche 6b, 7b (Fig. 3) auf, die Teil einer im Gießverfahren hergestellten Hohlraumstruktur 6c, 7c mit angeformten Schraubenbutzen 6d, 7d sind und die mittels mehrerer Befestigungsschrauben 9 an korrespondierenden Anschlussflanschen (ohne Bezugszeichen) des Zylinderblockes 1 fest angeschraubt sind. Die Hohlraumstrukturen 6c, 7c gehen, wie dies insbesondere auch aus Fig. 1 bzw. 3 ersichtlich ist, in die Tragarme 6a, 7a über.

In die Motorträger 6, 7 sind ferner Abschnitte 6e, 7e einer Ladeluftleitung 10 der Brennkraftmaschine integriert, die beginnend an einer Eintritts- bzw. Austrittsöffnung 6f, 7f an den Motorträger 6, 7 angegossen sind und über einen Krümmungsabschnitt 6g, 7g in einen horizontal verlaufenden und über die Stirnseite 3 des Zylinderblockes 1 vorragenden Befestigungsflansch 6h, 7h einmünden.

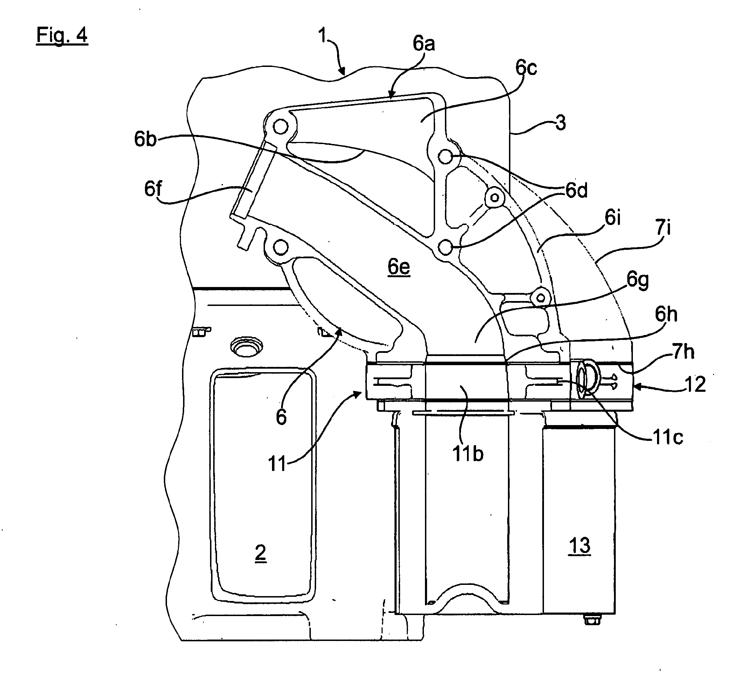

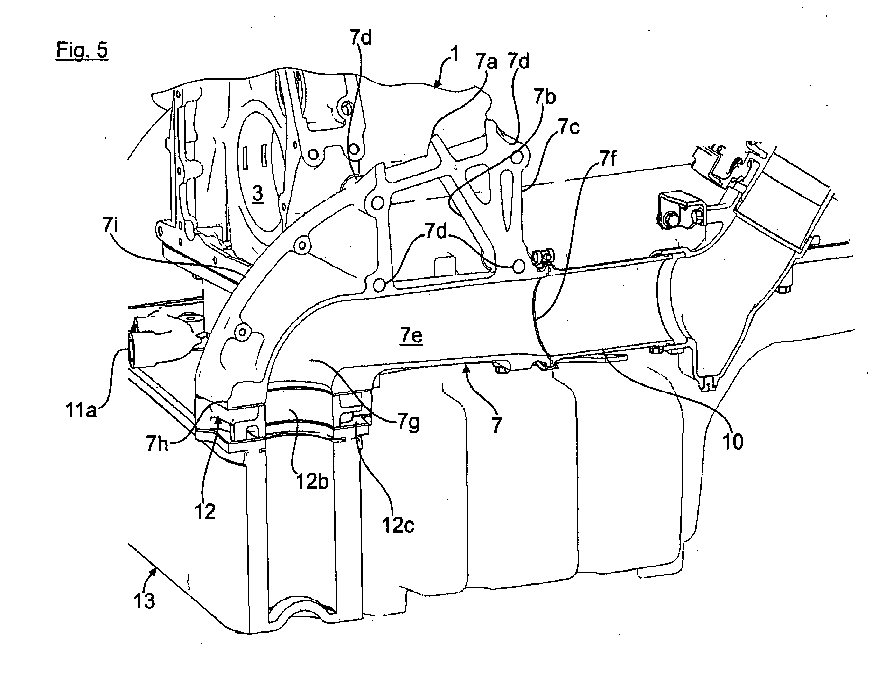

Wie insbesondere die Fig. 4 und 5 zeigen, verlaufen die rohrförmigen Abschnitte 6e, 7e der Ladeluftleitung 10 in der Bildebene dieser Figuren jeweils unterhalb der Arme 6a, 7a der Motorträger 6, 7 und sind an die längs verlaufenden Anschlussflansche 6b, 7b und an nach vorne abragende Verstärkungsrippen 6i, 7i angegossen. Die Befestigungsschrauben 9 sowie die Schraubenbutzen 6d, 7d liegen dabei, wie dies aus den Figuren ersichtlich ist , bevorzugt außerhalb der Rohrkontur der Abschnitte 6e, 7e, so dass strömungsbehindernde Einschnitte oder Verengungen vermieden sind.

An die Befestigungsflansche 6h, 7h ist, hier beispielhaft über Zwischenflansche 11, 12, ein Ladeluftkühler 13 angeschlossen, der sich quer zur Längsachse der Brennkraftmaschine unterhalb der Stirnseite 3 und vor der Ölwanne 2 erstreckt.

Der nicht näher dargestellte Ladeluftkühler 13 ist bevorzugt ein Luft-Wasser-Wärmetauscher, der über die Zwischenflansche 11, 12 mit entsprechenden Anschlussstutzen 11a, 12a an das Flüssigkeits-Kühlsystem der Brennkraftmaschine angeschlossen ist und der im Gegenstromprinzip die über den Motorträger 6 bzw. den Abschnitt 6e der Ladeluftleitung 10 einströmende, erhitzte Ladeluft über entsprechende Durchtrittsöffnungen bzw. integrierte Kanäle herunterkühlt, bevor die Ladeluft dann über den Abschnitt 7e im zweiten Motorträger 7 wieder abströmt

Die Zwischenflansche 11, 12 weisen hier beispielhaft und bevorzugt eine große Öffnung 11 b, 12b für den Durchtritt der Ladeluft zum Ladeluftkühler 13 und mehrere, kleinere Strömungskanäle 11 c, 12c (Fig. 4, 5) für die Kühlwasserversorgung von den Anschlussstutzen 11a, 12a zum Ladeluftkühler 13 auf.

Der Ladeluftkühler 13, die Zwischenflansche 11, 12 und die Befestigungsflansche 6h, 7h der Motorträger 6, 7 weisen ein einheitliches Flanschbild auf und sind unter Zwischenschaltung von Dichtungen (ohne Bezugszeichen) und mittels die Flansche durchdringender Schrauben (ohne Bezugszeichen) fest und fluiddicht miteinander verbunden.

Die einheitlich mit 10 bezeichnete Ladeluftleitung mit den in die Motorträger 6, 7 integrierten Abschnitten 6e, 7e verbindet bevorzugt einen HochdruckVerdichter 14 einer zweistufigen Turbo-Aufladeeinrichtung 15 an sich bekannter Konstruktion an der einen Längsseite 4 der Brennkraftmaschine (Fig. 1) mit einer nicht dargestellten Luftverteileinrichtung auf der anderen Längsseite 5 (Fig. 2) der Brennkraftmaschine. Die Luftverteileinrichtung ist ebenfalls bekannter Bauart und bei 16 an die Ladeluftleitung 10 angeschlossen.

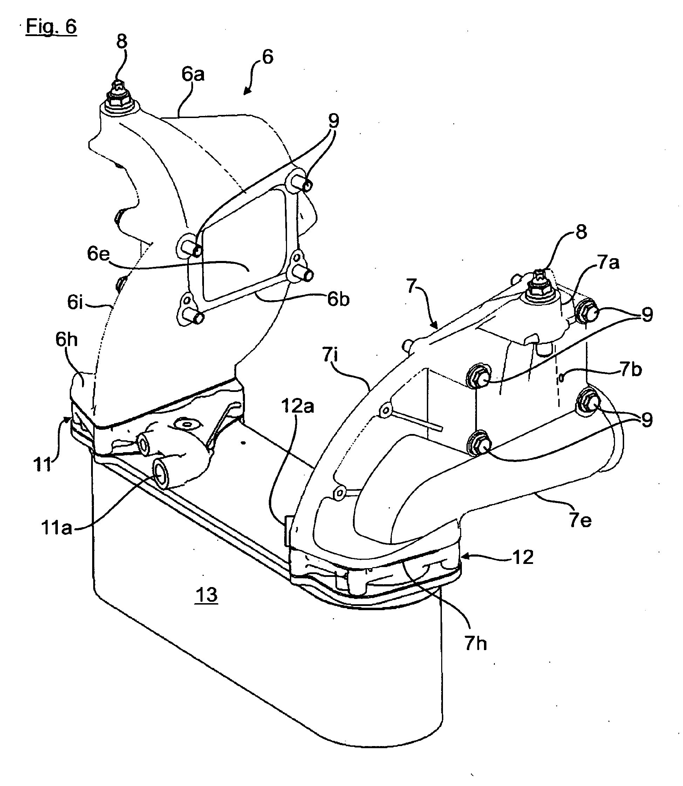

Die Fig. 6 zeigt die beiden Motorträger 6, 7, die Zwischenflansche 11, 12 und den Ladeluftkühler 13 als Montageeinheit. Die anschließenden Leitungen der Ladeluftleitung 10 können als Steckverbindungen ausgeführt und über Dichtringe abgedichtet und wie dargestellt anmontiert sein.

Die im Gießverfahren hergestellten, teils doppelwandigen bzw. als Hohlprofile ausgeführten Motorträger 6, 7 sind aufgrund der integrierten Abschnitte 6e, 7e der Ladeluftleitung 10 besonders tragfähig und können somit problemlos sowohl ihre Funktion als Motorträger als auch als Aufnahme für den Ladeluftkühler 13 erfüllen. Zudem ist eine besonders stabile und bauraumgünstige Anordnung der gesamten Ladeluftleitung 10, 6e, 13, 7e geschaffen. Schließlich ist über die Anschlussstutzen 11a, 12a der Zwischenflansche 11, 12 auch ein einfacher Anschluss des Ladeluftkühlers 13 an das Kühlsystem der Brennkraftmasche oder an ein separates Niedertemperatur-Kühlsystem gegeben.

### Bezugszeichenliste

- 1: Zylinderblock
- 2: Ölwanne
- 3: Stirnseite
- 4: Längsseite
- 5: Längsseite
- 6, 7: Motorträger
- a: Tragarm
- b: Anschlussflansch
- c: Hohlraumstruktur
- d: Schraubenbutzen
- e: Abschnitt von 10
- f: Rohranschluss
- g: Krümmungsabschnitt
- h: Befestigungsflansch
- i: Verstärkungsrippen
- 8: Schrauben
- 9: Befestigungsschrauben
- 10: Ladeluftleitung
- 11, 12: Zwischenflansch
- a: Anschlussstutzen
- b: Öffnung
- c: Strömungskanäle
- 13: Ladeluftkühler
- 14: Hochdruckverdichter
- 15: Aufladeeinrichtung

## Patentansprüche

1. Brennkraftmaschine, insbesondere für Kraftfahrzeuge, mit einer Ladeluftleitung (10), Motorträgern (6, 7) und einem Ladeluftkühler (13) wobei ein Abschnitt (6e, 7e) der Ladeluftleitung (10) durch einen seitlich angebauten Motorträger (6, 7) der Brennkraftmaschine geführt ist und zwischen den Motorträgern (6, 7) ein Ladeluftkühler (13) eingeschaltet ist, **dadurch gekennzeichnet, dass** Abschnitte (6e, 7e) der Ladeluftleitung (10) in an beiden Längsseiten (4, 5) der Brennkraftmaschine vorgesehene Motorträger (6, 7) integriert sind, dass der Ladeluftkühler (13) an Befestigungsflanschen (6h, 7h) der beiden Motorträger (6, 7) angeschlossen ist und mit den integrierten Abschnitten (6e, 7e) der Ladeluftleitung (10) kommuniziert wobei die beiden Motorträger (6, 7) den Ladeluftkühler (13) tragen.

2. Brennkraftmaschine nach Anspruch 1, **dadurch gekennzeichnet, dass** die an den Motorträgern (6, 7) vorgesehenen, im Einbauzustand vorzugsweise etwa horizontal ausgerichteten Befestigungsflansche (6h, 7h) eine Stirnseite (3) der Brennkraftmaschine überragen, vorzugsweise die der Kraftabgabeseite gegenüberliegende Stirnseite (3) der Brennkraftmaschine überragen, und mit dem vorzugsweise vor der Stirnseite (3) positionierten Ladeluftkühler (13) mit korrespondierenden Gegenflanschen verschraubt sind.

3. Brennkraftmaschine nach Anspruch 1 oder 2, **dadurch gekennzeichnet,**
**dass** die Motorträger (6, 7) mit im Einbauzustand vorzugsweise im Wesentlichen vertikal verlaufenden Anschlussflanschen (6b, 7b) an den Längsseiten (4, 5) der Brennkraftmaschine befestigt sind, dass, in Fahrzeughochachsenrichtung gesehen, oberhalb der Anschlussflansche (6b, 7b) seitlich abragende Tragarme (6a, 7a) angeordnet, vorzugsweise angeformt, sind, und dass die die Stirnseite (3) der Brennkraftmaschine überragenden Befestigungsflansche (6h, 7h), in Fahrzeughochachsenrichtung gesehen, unterhalb der Anschlussflansche (6b, 7b) liegen.

4. Brennkraftmaschine nach einem der vorhergehenden Ansprüche, **dadurch gekennzeichnet, dass** die an den Motorträgern (6, 7) vorgesehenen Abschnitte (6e, 7e) der Ladeluftleitung (10) unmittelbar an die Anschlussflansche (6b, 7b) und an die Tragarme (6a, 7a) angegossen sind.

5. Brennkraftmaschine nach Anspruch 4, **dadurch gekennzeichnet, dass** die angegossenen Abschnitte (6e, 7e) der Ladeluftleitung (10) einerseits einen Rohranschluss (6f, 7f) aufweisen und andererseits über einen Krümmungsabschnitt (6g, 7g) in die Befestigungsflansche (6h, 7h) einmünden.

6. Brennkraftmaschine nach einem der vorhergehenden Ansprüche, **dadurch gekennzeichnet, dass** mehrere Befestigungsschrauben (9) die Anschlussflansche (6b, 7b) und teilweise die Tragarme (6a, 7a) außerhalb der angegossenen. Abschnitte (6e, 7e) der Ladeluftleitung (10) durchdringen und in korrespondierende Anschlussflansche an den Längsseiten (4, 5) der Brennkraftmaschine eingeschraubt sind.

7. Brennkraftmaschine nach einem der vorhergehenden Ansprüche, **dadurch gekennzeichnet, dass** der Ladeluftkühler (13) ein Luft-Wasser-Wärmetauscher ist, der an das Flüssigkeits-Kühlsystem der Brennkraftmaschine angeschlossen ist.

8. Brennkraftmaschine nach Anspruch 7, **dadurch gekennzeichnet, dass** der Kühlwasser-Anschluss des Ladeluftkühlers (13) einströmseitig und/oder ausströmseitig über Zwischenflansche (11, 12) erfolgt, die zwischen den Befestigungsflanschen (6h, 7h) der Motorträger (6, 7) und den korrespondierenden Gegenflanschen des Ladeluftkühlers (13) angeordnet sind und die jeweils einen Anschlussstutzen (11a, 12a) für einen Kühlwasserschlauch und integrierte, mit dem Ladeluftkühler (13) kommunizierende Kühlwasserkanäle (11 c, 12c) aufweisen.

9. Brennkraftmaschine nach einem der vorhergehenden Ansprüche, **dadurch gekennzeichnet, dass** sich die Ladeluftleitung (10) von einer Aufladeeinrichtung an der einen Längsseite der Brennkraftmaschine zu einer Luftverteilereinrichtung auf der anderen Längsseite erstreckt.

10. Brennkraftmaschine nach einem der vorhergehenden Ansprüche, **dadurch gekennzeichnet, dass** die Ladeluftleitung (10) mit dem funktionell integrierten Ladeluftkühler (13) Teil einer ein- oder zweistufigen Abgasturbo-Aufladung (15) ist und den Verdichter (14) des Hochdruck-Abgasturboladers mit der Luftverteilereinrichtung auf der anderen Längsseite (5) der mehrzylindrigen Brennkraftmaschine verbindet.

## Claims

1. Internal combustion engine, in particular for motor vehicles, having a charge-air line (10), engine supports (6, 7) and a charge-air cooler (13), wherein a portion (6e, 7e) of the charge-air line (10) is guided through an engine support (6, 7) which is mounted on the side of the internal combustion engine, and a charge-air cooler (13) is connected between the engine supports (6, 7), **characterized in that** portions (6e, 7e) of the charge-air line (10) are integrated into engine supports (6, 7) provided on the two longitudinal sides (4, 5) of the internal combustion engine, **in that** the charge-air cooler (13) is connected to fastening flanges (6h, 7h) of the two engine supports (6, 7) and communicates with the integrated portions (6e, 7e) of the charge-air line (10), wherein the two engine supports (6, 7) support the charge-air cooler (13).

2. Internal combustion engine according to Claim 1, **characterized in that** the fastening flanges (6h, 7h) which are provided on the engine supports (6, 7) and which in the installed state are aligned preferably approximately horizontally project beyond an end side (3) of the internal combustion engine, preferably project beyond that end side (3) of the internal combustion engine which is situated opposite the power output side, and are screwed to the charge-air cooler (13), which is positioned preferably in front of the end side (3), by means of corresponding counterpart flanges.

3. Internal combustion engine according to Claim 1 or 2, **characterized in that** the engine supports (6, 7) are fastened to connecting flanges (6b, 7b), which preferably run substantially vertically in the installed state, on the longitudinal sides (4, 5) of the internal combustion engine, **in that** laterally projecting support arms (6a, 7a) are arranged, preferably integrally formed, above the connecting flanges (6b, 7b) as viewed in the direction of the vehicle vertical axis, and **in that** the fastening flanges (6h, 7h) which project beyond the end side (3) of the internal combustion engine are situated below the connecting flanges (6b, 7b) as viewed in the direction of the vehicle vertical axis.

4. Internal combustion engine according to one of the preceding claims, **characterized in that** those portions (6e, 7e) of the charge-air line (10) which are provided on the engine supports (6, 7) are integrally cast directly into the connecting flanges (6b, 7b) and into the support arms (6a, 7a).

5. Internal combustion engine according to Claim 4, **characterized in that** the integrally cast portions (6e, 7e) of the charge-air line (10) have a pipe connection (6f, 7f) at one side and issue at the other side, via a curved portion (6g, 7g), into the fastening flanges (6h, 7h).

6. Internal combustion engine according to one of the preceding claims, **characterized in that** a plurality of fastening screws (9) extend through the connecting flanges (6b, 7b) and partially through the support arms (6a, 7a) outside the integrally cast portions (6e, 7e) of the charge-air line (10) and are screwed into corresponding connecting flanges on the longitudinal sides (4, 5) of the internal combustion engine.

7. Internal combustion engine according to one of the preceding claims, **characterized in that** the charge-air cooler (13) is an air-water heat exchanger which is connected to the liquid cooling system of the internal combustion engine.

8. Internal combustion engine according to Claim 7, **characterized in that** the cooling water connection of the charge-air cooler (13) is realized at the inflow side and/or at the outflow side via intermediate flanges (11, 12) which are arranged between the fastening flanges (6h, 7h) of the engine supports (6, 7) and the corresponding counterpart flanges of the charge-air cooler (13) and which have in each case one connecting piece (11a 12a) for a cooling water hose and integrated cooling water ducts (11c, 12c) which communicate with the charge-air cooler (13).

9. Internal combustion engine according to one of the preceding claims, **characterized in that** the charge-air line (10) extends from a supercharging device on one longitudinal side of the internal combustion engine to an air distributor device on the other longitudinal side.

10. Internal combustion engine according to one of the preceding claims, **characterized in that** the charge-air line (10) with the functionally integrated charge-air cooler (13) is part of a single-stage or two-stage exhaust-gas turbocharging system (15) and connects the compressor (14) of the high-pressure exhaust-gas turbocharger to the air distributor device on the other longitudinal side (5) of the multi-cylinder internal combustion engine.

## Revendications

1. Moteur à combustion interne (1), notamment de véhicule automobile comportant une conduite d'air de suralimentation (10), des supports de moteur (6, 7) et un refroidisseur d'air de suralimentation (13),
- un segment (6e, 7e) de la conduite d'air de suralimentation (10) traversant un support (6, 7) du moteur à combustion interne, installé latéralement et un refroidisseur d'air de suralimentation (13) étant installé entre les supports de moteur (6, 7),
moteur à combustion interne **caractérisé en ce que**
- les segments (6e, 7e) de la conduite d'air de suralimentation (10) sont intégrés dans les supports de moteur (6, 7) prévus sur les deux côtés longitudinaux (4, 5) du moteur à combustion interne,
- le refroidisseur d'air de suralimentation (13) est raccordé aux brides de fixation (6h, 7h) des deux supports de moteur (6, 7) et il communique avec les segments intégrés (6e, 7e) de la conduite d'air de suralimentation (10), les deux supports de moteur (6, 7) portant le refroidisseur d'air de suralimentation (13).

2. Moteur à combustion interne selon la revendication 1,
**caractérisé en ce que**
les brides de fixation (6h, 7h) orientées à l'état installé, de préférence sensiblement horizontalement et qui sont prévues sur les supports de moteur (6, 7), dépassent de la face frontale (3) du moteur à combustion interne, de préférence la face frontale (3) du moteur qui est à l'opposé du côté de sortie de la puissance, et elles sont vissées à des contre-brides correspondantes du refroidisseur d'air de suralimentation (13) placé de préférence devant cette face frontale (3).

3. Moteur à combustion interne selon la revendication 1 ou 2,
**caractérisé en ce que**
les supports de moteur (6, 7) sont fixés aux grands côtés longitudinaux (4, 5) du moteur à combustion interne, à des brides de raccordement (6b, 7b) qui, sont pratiquement verticales, à l'état installé,
- et selon la direction de l'axe vertical du véhicule, au-dessus des brides de raccordement (6b, 7b), il y a des bras de support (6a, 7a) venant latéralement en saillie et qui font de préférence corps avec les brides, et
- les brides de fixation (6h, 7h) qui dépassent de la face frontale (3) du moteur à combustion interne, se situent en dessous des brides de raccordement (6b, 7b) selon la direction de l'axe vertical du véhicule.

4. Moteur à combustion interne selon l'une des revendications précédentes,
**caractérisé en ce que**
les segments (6e, 7e) de la conduite d'air de suralimentation (10) sur les supports de moteur (6, 7), sont raccordés directement aux brides de raccordement (6b, 7b) et aux bras de support (6a, 7a).

5. Moteur à combustion interne selon la revendication 4,
**caractérisé en ce que**
les segments raccordés (6e, 7e) de la conduite d'air de suralimentation (10) ont d'une part un raccord de conduite (6f, 7f) et d'autre part ils débouchent par un segment de coude (6g, 7g) dans chaque bride de fixation (6a, 7h).

6. Moteur à combustion interne selon l'une des revendication précédentes,
**caractérisé en ce que**
plusieurs vis de fixation (9) traversent les brides de raccordement (6b, 7b) en partie les bras de support (6a, 7a) à l'extérieur des segments (6e, 7e) faisant corps de la conduite d'air de suralimentation (10) et ces vis passent dans des brides de raccordement correspondantes des côtés longitudinaux (4, 5) du moteur à combustion interne.

7. Moteur à combustion interne selon l'une des revendications précédentes,
**caractérisé en ce que**
le refroidisseur d'air de suralimentation (13) est un échangeur de chaleur eau/air relié au circuit de refroidissement par liquide du moteur à combustion interne.

8. Moteur à combustion interne selon la revendication 7,
**caractérisé en ce que**
le branchement d'eau de refroidissement du refroidisseur d'air de suralimentation (13) se fait côté entrée et/ou côté sortie par des brides intermédiaires (11, 12) installées entre les brides de fixation (6h, 7h) des supports de moteur (6, 7) et les brides complémentaires correspondantes du refroidisseur d'air de suralimentation (13) et elles ont chacune un ajutage de branchement (11a, 12a) pour une conduite d'eau de refroidissement et des canaux d'eau de refroidissement (11c, 12c) intégrés, communiquant avec le refroidisseur d'air de suralimentation (13).

9. Moteur à combustion interne selon l'une des revendications précédentes,
**caractérisé en ce que**
la conduite d'air de suralimentation (10) relie une installation de suralimentation sur un côté longitudinal du moteur à combustion interne à une installation de distribution d'air sur l'autre côté longitudinal.

10. Moteur à combustion interne selon l'une des revendications précédentes,
**caractérisé en ce que**
la conduite d'air de suralimentation (10) avec le refroidisseur d'air de suralimentation (13) fonctionnellement intégré, fait partie d'un montage à un ou deux étages de turbocompresseurs de gaz d'échappement (15) et elle relie le compresseur (14) du turbocompresseur haute pression à l'installation de distribution d'air sur l'autre côté longitudinal (5) du moteur à combustion interne à plusieurs cylindres.
